# DEMANDE DE BREVET EUROPEEN

(11) **EP 1 686 009 A2**
(43) Date de publication de la demande: **02.08.2006**
(21) Numéro de dépôt: 06001505.4
(22) Date de dépôt: 25.01.2006
(51) Int. Cl.: B60R 9/10, B60R 9/06

(54) **Dispositif pour le portage d'un cycle ou pour la traction d'un motocycle**

(30) Priorité: 26.01.2005 FR 0500810
(71) Demandeur: Padou,, Alain, 7520 Templeuve (BE)
(72) Inventeur: Padou,, Alain, 7520 Templeuve (BE)
(74) Mandataire: Hennion, Jean-Claude

(57) **Abrégé**

Le dispositif s'adapte sur l'arrière d'un véhicule automobile (1). Il comporte:
a) une tige d'arrimage (7) télescopique entre une position d'introduction dans le coffre arrière (4) et une position de blocage dans laquelle ses extrémités sont en appui sur les flancs latéraux du coffre;
b) une barre de soutien (8) équipée de plots (11) destinés à venir en appui sur la carrosserie (3a) et de deux jeux de sangles de liaison, un premier (12) pour la liaison de la barre de soutien (8) avec la tige d'arrimage (7) et un second (13) pour la liaison de la barre de soutien (8) avec des crochets de remorquage (5), disposés sous l'arrière du véhicule;
c) un cadre support (9) du motocycle dont l'avant est monté à pivotement sur la barre de soutien (8) et équipé de moyens pour la fixation du motocycle sur ledit cadre;
d) et des moyens de soulèvement de la partie arrière du cadre (9), supportant le motocycle.

## Description

La présente invention concerne le transport d'un cycle, notamment d'une bicyclette, ou d'un motocycle, notamment d'un scooter ou d'une moto.

Elle concerne plus particulièrement un dispositif pour le portage d'un cycle ou pour la traction d'un motocycle, dispositif qui est apte à être adapté sur l'arrière d'un véhicule automobile.

On connaît pour le transport des bicyclettes, une très grande diversité de dispositifs ou bien qui sont fixés sur des moyens intégrés à demeure dans la carrosserie du véhicule notamment du type attache caravane, ou bien qui peuvent être montés, de manière ponctuelle, sur l'arrière du véhicule et qui comporte, le plus souvent des bras de portage sur lesquels est positionné le cadre de la bicyclette.

Sont également connus des dispositifs réalisant la traction d'un motocycle. Par exemple dans le document FR 2.185.247, la roue avant du motocycle est solidarisée, au niveau de son axe de rotation, à un cadre support qui lui-même est solidarisé à l'arrière du véhicule grâce à une chape fixée de manière définitive sur la carrosserie dudit véhicule.

La présente invention peut concerner le portage d'un cycle. Cependant, elle concerne de préférence la traction d'un motocycle à l'instar de ce qui est enseigné par le document 2.185.247.

Dans ces deux applications, elle concerne un dispositif qui diffère de l'état antérieur par les moyens particuliers mis en oeuvre pour réaliser la fixation sur l'arrière du véhicule soit des éléments de portage du cycle soit des éléments de support de la roue avant du motocycle.

Plus particulièrement, la présente invention concerne un dispositif pour le portage d'un cycle ou pour la traction d'un motocycle, apte à être adapté sur l'arrière d'un véhicule automobile qui comporte un coffre arrière et des crochets de remorquage ou similaires.

De manière caractéristique, ledit dispositif comporte :
a) une tige d'arrimage de structure télescopique apte se déployer entre une position d'introduction dans le coffre et une position de blocage dans laquelle les extrémités de la tige sont en appui sur les flancs latéraux du coffre, à proximité de la paroi arrière de celui-ci ;
b) une barre de soutien équipée d'une part d'au moins deux plots destinés à venir en appui sur la carrosserie et, d'autre part, de deux jeux de sangles de liaison, un premier jeu pour la liaison de la barre de soutien avec la tige d'arrimage et un second jeu pour la liaison de la barre de soutien avec les crochets de remorquage ou similaires, disposés sous l'arrière du véhicule ;
c) un cadre support du cycle ou monocycle dont la partie avant est montée à pivotement sur la barre de soutien et qui est équipée de moyens de fixation aptes à réaliser la fixation du cycle ou du monocycle lorsqu'il est installé sur ledit cadre ;
d) des moyens de soulèvement de la partie arrière du cadre, par rapport au sol, une fois que le cycle ou le motocycle est fixé sur le cadre.

Ainsi, selon la disposition particulière de la présente invention, le dispositif ne nécessite pas d'intégrer sur l'arrière de la carrosserie des moyens installés définitivement du type attache caravane, ou encore une chape comme dans le document 1.285.247.

Le dispositif de la présente invention peut être rapporté et monté facilement et rapidement sur l'arrière du véhicule.

Il est constitué d'un nombre limité de pièces dont le rangement peut être effectué dans le coffre du véhicule directement ou disposées dans un sac de portage.

S'agissant de l'application du dispositif au portage d'une bicyclette, les moyens de soulèvement de la partie arrière du cadre peuvent consister dans des sangles dont l'extrémité libre est pourvue de crochets. En pratique, les crochets sont mis en place dans la rainure supérieure du coffre et la longueur des sangles est adaptée pour que lorsque les crochets sont mis en place on obtienne le soulèvement du cadre.

Il peut également s'agir d'une tige de fixation dont les extrémités comportent des moyens de fixation pour l'une, à la partie avant du cadre support et pour l'autre au cadre de la bicyclette. La longueur de cette tige est déterminée pour que, lors de la mise en place de la tige, on obtienne corrélativement le soulèvement du cadre support.

Les caractéristiques définies ci-après visent préférentiellement, voire parfois exclusivement, l'application du dispositif de la présente invention à la traction d'un scooter ou d'une moto de petite cylindrée.

Dans une variante de réalisation, la partie avant du cadre support comporte une gorge transversale, par exemple sous la forme d'un fer en U, permettant l'emboîtement du cadre sur une portion de la barre de soutien entre deux plots d'appui, ladite barre, au niveau de cette portion, ayant une section circulaire.

Ainsi lors du soulèvement du cadre, la partie avant peut pivoter angulairement autour de la barre de soutien.

Sont préférentiellement prévus des moyens de sûreté, par exemple du type goupille ou similaire, aptes à empêcher lors du déplacement du véhicule que la barre de soutien ne sorte de la gorge transversale du cadre support.

Eventuellement, la barre de soutien, dans sa portion venant en contact avec la gorge transversale, peut être protégée par une gaine en mousse de manière à amortir les chocs susceptibles de se produire lors du déplacement du véhicule entre la face intérieure de ladite gorge et la surface extérieure de la barre de soutien.

Dans une variante de réalisation spécifique de la traction d'un motocycle, les moyens de soulèvement de la partie arrière du cadre, une fois que la roue avant du motocycle est fixée sur le cadre support, consistent en :
- une première sangle, de préférence matelassée, terminée à ses deux extrémités par des oeillets ;
- un anneau sur lequel peuvent être encliquetés les oeillets de la première sangle une fois que celle-ci est passée autour du guidon du motocycle ;
- une deuxième sangle fixée latéralement d'un coté de la partie arrière du cadre support dont l'extrémité est équipée d'un dispositif tendeur de blocage et ;
- une troisième sangle qui est fixée latéralement sur l'autre coté de la partie arrière du cadre support et dont l'extrémité libre est apte à coopérer avec le dispositif tendeur.

Ainsi il suffit à l'utilisateur d'introduire l'extrémité libre de la troisième sangle d'une part, à travers l'anneau et d'autre part dans le dispositif tendeur et de réaliser la mise en tension de la deuxième et troisième sangle pour soulever l'arrière du cadre, par exemple sur une hauteur de vingt cinq centimètres.

Dans une variante de réalisation, le dispositif permet de réaliser à la fois la traction d'un motocycle et le portage d'une bicyclette.

Dans cette variante, le cadre support est dimensionné de telle sorte que puisse être disposé sur l'avant du cadre un élément transversal de portage de la bicyclette, par exemple une pièce en U dont la gorge est tournée vers le haut de telle sorte que puisse s'y loger les deux roues de la bicyclette. De préférence cet élément transversal de portage comporte des montants verticaux de calage, aptes à réaliser le calage de la bicyclette et également sa fixation au cadre grâce à tout moyen approprié notamment des sangles de fixation.

La présente invention sera mieux comprise à la lecture de la description qui va être faite d'exemples de réalisation du dispositif pour le portage d'une bicyclette et pour la traction d'un motocycle illustré par le dessin annexé dans lequel :
- la figure 1 est une représentation schématique illustrant en vue de coté, un premier exemple du dispositif spécialement conçu pour la traction d'un motocycle, lequel est, sur ladite figure, déjà installé sur l'arrière d'un véhicule ;
- la figure 2 est une représentation sous forme de diagramme des forces mises en jeu pour assurer le maintien du dispositif de la figure 1 ;
- la figure 3 est une vue schématique en perspective d'un cadre support spécialement conçu pour le dispositif de la figure 1 ;
- la figure 4 est une vue schématique en coupe du système de fixation de la roue avant du motocycle sur le cadre support de la figure 3 ;
- la figure 5 détaille les différents éléments de soulèvement de la partie arrière du cadre support de la figure 3 ;
- la figure 6 est une représentation schématique en perspective de l'élément supplémentaire de portage d'une bicyclette destinée à être montée sur le cadre support de la figure 3 ;
- la figure 7 est une vue schématique en perspective d'un second exemple de réalisation du dispositif destiné spécifiquement au portage d'un cycle.

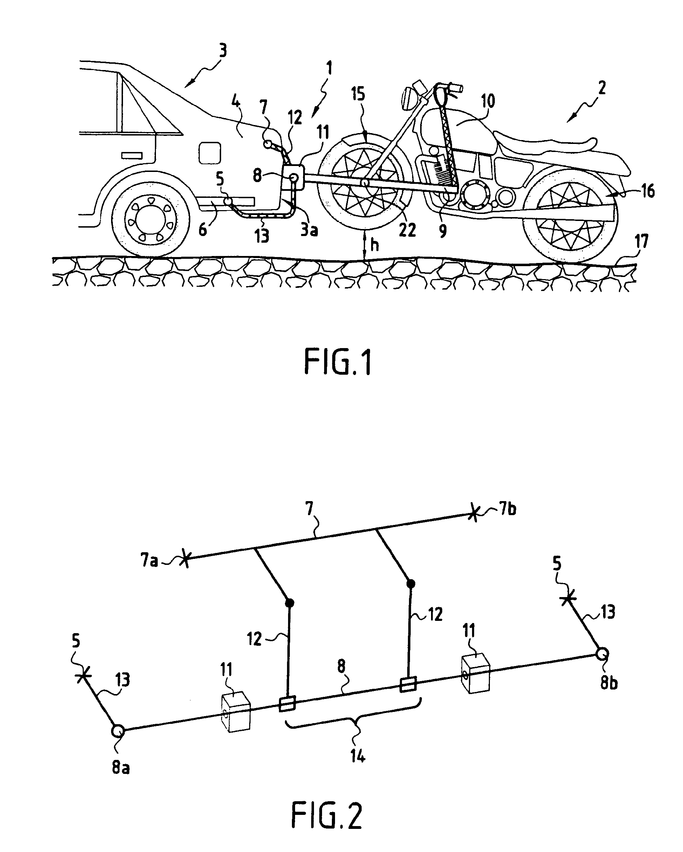

Selon le premier exemple qui est illustré aux figures 1 à 6, le dispositif 1 de la présente invention est spécialement conçu pour tracter un motocycle 2 à l'arrière d'un véhicule automobile 3, ledit véhicule automobile comportant d'une part, un coffre arrière 4 et d'autre part des crochets de remorquage 5 qui sont prévus d'origine spécifiquement en partie basse de la caisse du véhicule 3.

Tous les véhicules automobiles récents possèdent des crochets de remorquage qui sont ainsi montés d'origine. Bien sûr dans le cas où ces crochets n'existeraient pas, il conviendrait d'en installer ou d'installer des moyens équivalents permettant l'accrochage des sangles faisant partie du dispositif 1 comme cela sera expliqué en détail ci-après.

Le dispositif 1 est composé d'une tige d'arrimage 7, d'une barre de soutien 8, d'un cadre support 9 et de moyens de soulèvement 10.

La tige d'arrimage 7 a une structure télescopique qui permet d'adapter sa longueur entre une longueur minimale qui correspondant à la position de rangement et d'introduction dans le coffre et une longueur maximale qui doit correspondre à la largeur la plus important du coffre 4 de tous les véhicules automobiles censés pouvoir être équipés du dispositif 1.

Les extrémités de cette tige 7 sont prévues pour venir, en position de blocage, s'appliquer entre les flancs latéraux intérieurs du coffre 4, à proximité de la paroi arrière dudit coffre. Ces extrémités sont donc de préférence du type à embout caoutchouc ou autre matière permettant de développer une surface d'appui et d'éviter d'endommager les flancs latéraux du coffre.

Un moyen de verrouillage, tel qu'une goupille, permet de maintenir en position ladite tige lorsque ces deux extrémités sont en appui sur les flancs latéraux.

La barre de soutien 8 est destinée à être positionnée à faible distance de la face arrière 3a du véhicule en dessous de l'ouverture du coffre. Eventuellement la face arrière peut être constituée par le pare-chocs. Cette barre de soutien 8 est équipée d'au moins deux plots 11 qui prennent appui sur ladite face arrière 3a. Ces plots 11 sont réalisés dans un matériau ayant une certaine capacité de compression, notamment élastomère. Ils présentent une surface de contact sur la face avant et un évidement central pour le passage de la barre de soutien 8.

Sur ladite barre 8, les deux plots 11 sont à distance l'un de l'autre.

La fixation de la barre de soutien 8 sur la partie arrière du véhicule 3 avec les deux plots 11 en appui sur la face arrière 3a est obtenue grâce à la mise en oeuvre de deux jeux de sangles de liaison 12,13.

Les sangles 12 du premier jeu servent à la liaison entre la barre de soutien 8 et la tige d'arrimage 7. Plus précisément comme cela est présenté schématiquement à la figure 2, les deux sangles 12 relient la barre de soutien 8 de part et d'autre d'une zone centrale 14 de ladite barre de soutien 8 a proximité des plots 11, la zone centrale 14, de section circulaire, qui correspond à l'emplacement prévu pour le montage du cadre support 9.

Quant aux sangles 13 du second jeu, elles relient les extrémités 8a,8b de la barre de soutien 8 aux crochets 5 de remorquage.

On comprend qu'une certaine longueur des sangles 12 du premier jeu se trouve à l'intérieur du coffre 4 lorsque la tige 7 est en position de blocage avec ses deux extrémités 7a, 7b en appui sur les flancs latéraux du coffre 4. Ceci n'est pas gênant dans la mesure où lesdites sangles étant plates, d'une part, cela n'empêche pas la fermeture du coffre et, d'autre part, elles ne sont pas dégradées par cette fermeture.

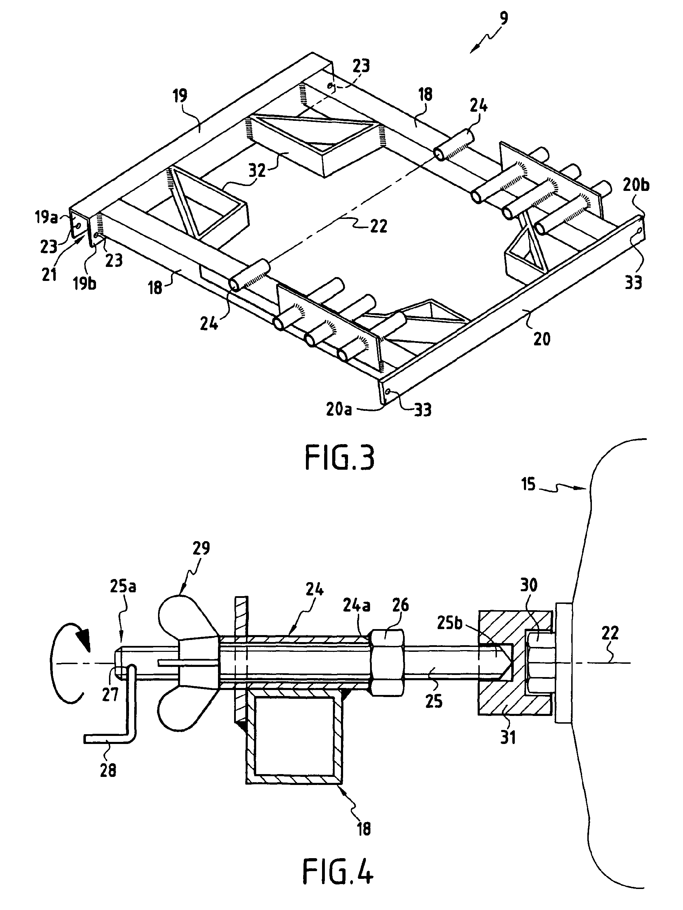

Le cadre support 9 dont le mode de réalisation est illustré à la figure 3, est destiné à supporter la roue avant 15 du motocycle 2, ladite roue étant surélevée par rapport au sol et une hauteur h qui peut par exemple être compris entre 25 et 30 centimètres, tandis que la roue arrière 16 du motocycle 2 reste en contact avec le sol 17.

Dans le mode de réalisation de la figure 3, le cadre support 9 a une forme générale rectangulaire avec deux longerons 18 qui sont reliés à l'avant du cadre support 9 par une pièce avant 19 transversale en U et à l'arrière par une traverse 20.

Du fait de sa forme en U, la pièce avant 19 comporte une gorge 21, tournée vers le bas, qui est destinée à venir s'emboîter sur la barre de soutien 8, ceci étant possible grâce à l'espace existant entre ladite barre de soutien 8 et la face arrière 3a du véhicule 3.

La pièce avant 19 est percée de trous débouchant 23 dans ses deux montant latéraux 19a, 19b. Ces trous débouchant 23 permettent de réaliser le verrouillage du cadre support 9 sur la barre de soutien 8 une fois que la pièce avant 19 a été mise en place sur la barre de soutien 8. Ces trous débouchant 23 sont donc disposés sous le niveau de ladite barre de soutien pour permettre l'introduction d'un système de verrouillage du type goupille ou assimilé.

La fixation de la roue avant 15 du motocycle 2 sur le cadre de support 9 est obtenue dans le mode de réalisation des figures 3 et 4 au niveau de l'axe de rotation 22 de ladite roue avant 15.

Sur les deux longerons 18 sont disposées dans le même alignement transversal qui correspond à l'axe de rotation 22, deux douilles 24 à l'intérieur desquelles peuvent coulisser et tourner librement des tiges 25 ; chaque tige 25 comporte au moins une portion filetée apte à coopérer avec le filetage intérieur d'un écrou 26 qui est soudé sur le bord interne 24a du tube 24.

Eventuellement, cet écrou 26 pourrait être supprimé en utilisant une douille 24 moins partiellement taraudé.

L'extrémité externe 25a de la tige 25 est munie d'un moyen permettant de faire pivoter sur elle-même cette tige 25. Il peut s'agir tout simplement d'un trou borgne 27 dans lequel peut être introduite une clé coudée 28.

De plus unécrou à oreille 29 est prévu vers cette extrémité 25a de manière à assurer le blocage de la tige 25 contre la douille 24.

L'extrémité interne 25b de la tige 25 soit est en prise directe sur l'axe 30 de la roue avant 15 soit indirectement grâce à une pièce intermédiaire 31 dont la configuration lui permet de s'adapter sur l'axe 30 et de recevoir l'extrémité interne 25b de la tige 25.

De manière schématique, sur la figure 3 ont été représentées différentes douilles 24 qui sont disposées à différents emplacements sur les longerons 18 de manière à ce que le dispositif 1 puisse convenir à toute une gamme de motocycle 2 dont les roues avant présentent des diamètres différents.

Sur la figure 3 on a également représenté des pièces de calage 32, permettant d'assurer un calage latérale de la roue avant 15 lorsqu'elle est disposée sur le cadre 9, lesdites pièces 32 ayant entre elles un écartement qui doit correspondre à la largeur maximale de la roue avant de toute la gamme des motocycles prévus pour le dispositif.

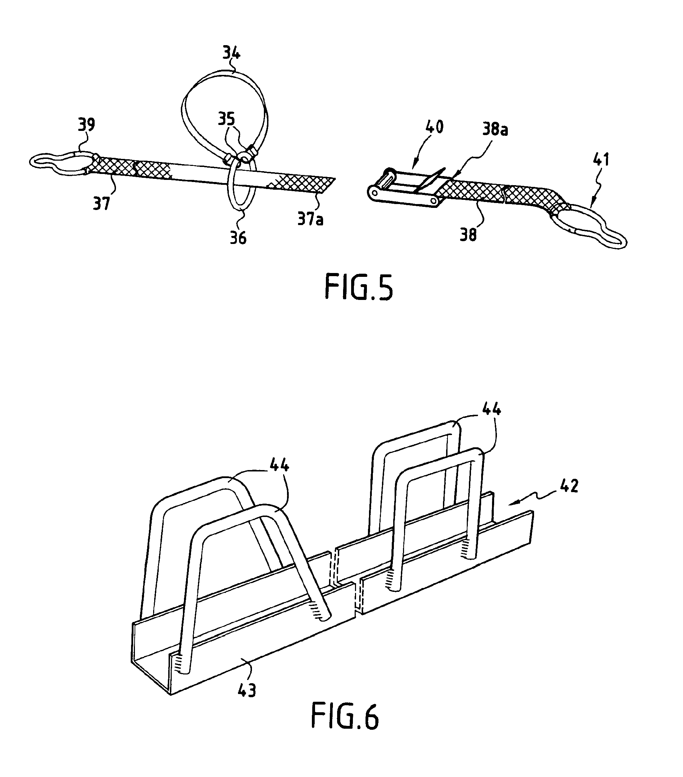

La traverse arrière 20 est percée, vers ses deux extrémités 20a, 20b de deux trous débouchant 33, destinés à accueillir les moyens de soulèvement 10du motocycle 2. Ces moyens de soulèvement dans l'exemple illustré à la figure 5 sont constitués par une sangle matelassée 34, un anneau 36 et un jeu de deux sangles 37 et 38. La sangle matelassée 34 est terminée par deux boucles 35 qui sont aptes à s'encliqueter sur l'anneau 36, une fois que ladite sangle 34 a été passée autour du guidon du motocycle 2.

La sangle 37 a une extrémité libre 37a et à l'opposé une boucle 39. La sangle 38 comporte, à une extrémité 38a, un dispositif de mise en tension et blocage 40 et à l'autre extrémité une boucle 41.

Les deux boucles 39 et 41 sont prévues pour être encliquetées dans les trous débouchant 33 de l'entretoise arrière 20.

La mise en place du dispositif 1 est réalisée de la manière suivante. Comme indiqué précédemment, on a préalablement fixé la tige d'arrimage 7, à l'intérieur du coffre 4 et la barre de soutien 8 avec les plots 11 en appui contre la face arrière 3a, le tout étant bloqué en position grâce aux deux jeux de sangles de liaison 12,13.

De manière à réaliser un blocage parfait de la barre de soutien sur l'arrière du véhicule 3 l'un au moins des jeux de sangles 12,13 est lui-même équipé de moyens de mise en tension et le blocage, non représenté.

Cette première opération étant réalisée, le cadre support 9 est monté sur la barre de soutien 8 comme indiqué précédemment, la pièce avant 19 venant s'emboîter sur la zone centrale 14 de la barre de soutien 8.

Le verrouillage du cadre de support 9 sur la barre de soutien 8 étant réalisé également, on avance le motocycle 2 sur le cadre support 9 jusqu'à ce que la roue avant 15 vienne se loger à l'intérieur du cadre support 9 entre la pièce avant 19 et l'entretoise arrière 20.

On soulève l'arrière du cadre support 9 de manière à aligner les deux douilles 24 entre les deux axes 30 de la roue avant 15. On réalise la fixation du cadre support 9 sur ladite roue avant 15 en actionnant les tiges 25 et en les bloquant grâce aux écrous ailettes 29.

Cette opération étant terminée, la roue avant 15 est toujours en appui sur le sol. Pour que le motocycle 2 puisse être tracté par le véhicule 3 il faut maintenant réaliser le soulèvement du cadre 9 et par conséquent de la roue avant 15.

Les boucles 39 et 41 des deux sangles 37 et 38 étant fixées aux deux extrémités 20a, 20b de l'entretoise 20, on fait passer l'extrémité libre 37a de la sangle 37 à travers l'anneau 36 et on introduit l'extrémité 37a dans le dispositif 40 de l'autre sangle 38. En réalisant la mise en tension, on obtient le soulèvement du cadre support 9 et de la roue avant 15 du motocycle 2. Le réglage de la hauteur h, de préférence de 25 à 30 centimètres, est obtenu par le réglage du tendeur 40. Lors de ce soulèvement il y a eu corrélativement le pivotement du cadre support 9 autour de la barre de soutien 8.

Il est à remarquer que la traction du motocycle 2 grâce au dispositif peut se faire dans des conditions de sécurité parfaites, même avec une conduite sportive sur des routes éventuellement peu carrossables. En effet, on constate que le motocycle 2 réagit parfaitement bien à toutes les configurations de conduite, la roue arrière et donc la partie du motocycle qui lui est attenante pouvant éventuellement s'incliner à l'instar de ce que pourrait lui imposer le motard dans le même type de conduite.

Sur la figure 6 est représenté un élément de portage de bicyclette qui peut être un accessoire complémentaire sur un dispositif 1 tel que celui décrit précédemment dont le cadre support 9 serait surdimensionné par rapport à la taille de la roue avant 15 du motocycle 2, permettant de dégager vers l'avant du cadre support 9 un espace suffisant pour loger une bicyclette.

Cet élément de portage 42 est destiné à être fixé transversalement soit de manière définitive soit de manière temporaire, par des moyens adaptés, sur les deux longerons 18. Cet élément comporte une pièce en U 43 servant de gouttière pour le logement des deux roues de la bicyclette, les montants latéraux de cette pièce 43 servant de butées pour éviter que lesdites roues ne puisse s'échapper de l'élément de portage 42.

Dans l'exemple illustré à la figure 6, des montants verticaux 44 ont été rapportés sur les montants latéraux de la pièce en U 43. Ces montants verticaux 44 confortent le calage de la bicyclette et permettent également de venir y fixer des moyens de fixation de la bicyclette.

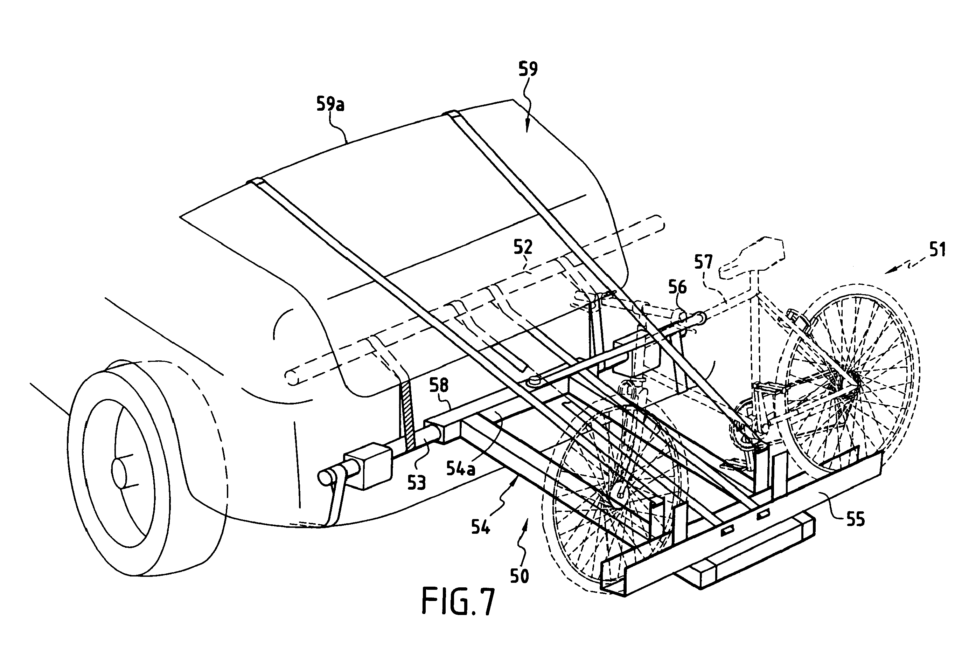

Sur la figure 7, est illustré un second exemple de réalisation d'un dispositif 50 selon la présente invention qui est conçu uniquement pour le portage d'une bicyclette 55. Ce dispositif 50 comprend comme dans le premier exemple ci-dessus, une tige 52 d'arrimage, une barre de soutien 53 et un cadre support 54. La tige d'arrimage 52 et la barre de soutien 53 ont strictement la structure qui est prévue dans le premier exemple et ne sont pas décrits outre mesure.

Le cadre support 54 est également monté en pivotement sur la barre de soutien 53, par exemple selon les mêmes dispositions que dans le premier exemple ci-dessus.

Vers sa partie arrière, le cadre support 54 est équipé d'un élément transversal de portage 55, éventuellement comme celui illustré à la figure 6.

Le soulèvement du cadre support 54 et la fixation de la bicyclette 51 sur ledit cadre support 54 est obtenu grâce à la mise en oeuvre d'une tige 56 dont les deux extrémités sont pourvues de moyens de fixation d'une part sur la partie avant 54a du cadre support 54 et d'autre part sur l'un des tubes 57 du cadre de la bicyclette 51.

Dans l'exemple illustré à la figure 7 la fixation de la tige 56 sur la partie avant 54 a du cadre support 54 est réalisé directement sur la pièce avant transversale 58 ; ceci peut être fait par une fixation indirecte soit par une rotule soit par un système permettant de déplacer transversalement la tige 56 par rapport au cadre 54. La tige 56 peut elle-même être de construction télescopique pour tenir compte de la taille et de l'emplacement de la fixation sur le cadre de la bicyclette.

Le système de fixation de la tige 56 sur la tige du cadre de la bicyclette 51 est de préférence assortie d'un cadenas, contre le vol de la bicyclette en cas d'arrêt du véhicule.

Bien sur il revient à l'utilisateur de conforter la stabilité de la bicyclette 51 en mettant en oeuvre des sangles ou courroies de fixation complémentaires. Il peut d'ailleurs en être de même en ce qui concerne le cadre support 54, en mettant en oeuvre des sangles reliant la partie arrière du cadre support 54 au coffre 59, grâce à des crochets aptes à venir en prise dans la rainure supérieure 59a du capot 59 du coffre.

La présente invention n'est pas limitée aux réalisations qui ont été décrites ci-dessus à titre d'exemple non exclusif, en particulier en ce qui concerne la structure proprement dite du cadre support, que ce soit pour celui qui est adapté à la traction des motocycles ou celui qui est adapté au portage des cycles, ainsi que des moyens de fixation des motocycles et cycles sur ledit cadre support.

## Revendications

1. Dispositif pour le portage d'un cycle ou pour la traction d'un motocycle, apte à être adapté sur l'arrière d'un véhicule automobile qui comporte un coffre arrière et des crochets de remorquage ou similaires, **caractérisé en ce qu'**il comporte :
a) une tige d'arrimage (7) de structure télescopique apte se déployer entre une position d'introduction dans le coffre (4) et une position de blocage dans laquelle les extrémités de la tige (9) sont en appui sur les flancs latéraux du coffre, à proximité de la paroi arrière de celui-ci ;
b) une barre de soutien (8) équipée d'une part d'au moins deux plots (11) destinés à venir en appui sur la carrosserie (3a) et, d'autre part, de deux jeux de sangles de liaison, un premier jeu (12) pour la liaison de la barre de soutien (8) avec la tige d'arrimage (7) et un second jeu (13) pour la liaison de la barre de soutien (8) avec les crochets de remorquage (5) ou similaires, disposés sous l'arrière du véhicule ;
c) un cadre support (9) du cycle ou monocycle dont la partie avant est montée à pivotement sur la barre de soutien (8) et qui est équipée de moyens de fixation aptes à réaliser la fixation du cycle ou du monocycle lorsqu'il est installé sur ledit cadre ;
d) des moyens de soulèvement (10) de la partie arrière du cadre (9), par rapport au sol, une fois que le cycle ou le motocycle est fixé sur le cadre.

2. Dispositif selon la revendication 1 pour le portage d'une bicyclette (51) **caractérisé en ce que** les moyens de soulèvement de la partie arrière du cadre consistent dans des sangles dont l'extrémité libre est pourvue de crochets destinés à être mis en place dans la rainure supérieure (59a) du coffre, la longueur des sangles étant adaptée pour que lorsque les crochets sont mis en place on obtienne le soulèvement du cadre (54).

3. Dispositif selon la revendication 1 pour le portage d'une bicyclette **caractérisé en ce que** les moyens de soulèvement consistent en une tige de fixation (56) dont les extrémités comportent des moyens de fixation pour l'une, à la partie avant du cadre support (54a) et pour l'autre au cadre (57) de la bicyclette (54), la longueur de cette tige (56) étant déterminée pour que, lors de la mise en place de la tige, on obtienne corrélativement le soulèvement du cadre support (54).

4. Dispositif selon la revendication 1 **caractérisé en ce que** la partie avant (19a) du cadre support (9) comporte une gorge transversale (21), par exemple sous la forme d'un fer en U, permettant l'emboîtement du cadre (9) sur une portion (14) de la barre de soutien (8) entre deux plots d'appui (11), ladite barre, au niveau de cette portion (14), ayant une section circulaire.

5. Dispositif selon la revendication 4 **caractérisé en ce que** des moyens de sûreté, par exemple du type goupille ou similaire, sont aptes à empêcher lors du déplacement du véhicule que la barre de soutien (8) ne sorte de la gorge transversale (21) du cadre support.

6. Dispositif selon l'une des revendications 4 ou 5 **caractérisé en ce que** la barre de soutien (8), dans sa portion (14) venant en contact avec la gorge transversale (21), est protégée par une gaine en mousse.

7. Dispositif selon la revendication 1 pour la traction d'un motocycle (2), **caractérisé en ce que** les moyens de soulèvement (10) de la partie arrière du cadre (9), une fois que la roue avant (19) du motocycle (2) est fixée sur le cadre support (9), consistent en :
- une première sangle (34), de préférence matelassée, terminée à ses deux extrémités par des boucles (35) ;
- un anneau (36) sur lequel peuvent être encliquetés les boucles (35) de la première sangle (34) une fois que celle-ci est passée autour du guidon du motocycle ;
- une deuxième sangle (38) fixée latéralement d'un côté de la partie arrière (20) du cadre support (9) et dont l'extrémité est équipée d'un dispositif tendeur de blocage (40) et ;
- une troisième sangle (37) qui est fixée latéralement sur l'autre coté de la partie arrière (20) du cadre support (9) et dont l'extrémité libre (37a) est apte à coopérer avec le dispositif tendeur (40).

8. Dispositif selon l'une des revendications 1, 4 à 6, apte à réaliser à la fois la traction d'un motocycle et le portage d'une bicyclette, **caractérisé en ce que** le cadre support est dimensionné de telle sorte que puisse être disposé sur l'avant du cadre support (9) un élément transversal de portage (42) de la bicyclette, par exemple une pièce en U (43) dont la gorge est tournée vers le haut de telle sorte que puissent s'y loger les deux roues de la bicyclette, de préférence ledit élément transversal de portage comportant des montants verticaux de calage, aptes à réaliser le calage de la bicyclette et également sa fixation au cadre support (9) grâce à tout moyen approprié notamment des sangles de fixation.
